# EUROPÄISCHE PATENTSCHRIFT

(11) **EP 3 747 733 B1**
(45) Veröffentlichungstag und Bekanntmachung des Hinweises auf die Patenterteilung: **01.03.2023**
(21) Anmeldenummer: 20174474.5
(22) Anmeldetag: 13.05.2020
(51) Int. Cl.: B62D 6/00

(54) **VERFAHREN ZUM BETREIBEN EINES LENKSYSTEMS**
METHOD FOR OPERATING A STEERING SYSTEM
PROCÉDÉ DE FONCTIONNEMENT D'UN SYSTÈME DE DIRECTION

(30) Priorität: 05.06.2019 DE 102019208201
(43) Veröffentlichungstag der Anmeldung: 09.12.2020
(73) Patentinhaber: VOLKSWAGEN AG, 38440 Wolfsburg (DE)
(72) Erfinder: Schäfer, Johannes Maria, 39615 Werben OT Berge (DE); Makkus, Björn, 38108 Braunschweig (DE); Pöhland, Andreas, 38518 Gifhorn (DE); Dreyer, Dirk, 31655 Stadthagen (DE)

(56) Entgegenhaltungen:
- DE-A1-102020 100 789
- US-A1- 2006 201 733
- US-A1- 2008 249 685

## Beschreibung

Die vorliegende Erfindung betrifft ein Verfahren zum Betreiben eines Lenksystems. Ferner bezieht sich die Erfindung auf ein Sicherheitssystem sowie ein Computerprogramm.

Aus dem Stand der Technik ist es bekannt, einen zusätzlichen Aktuator bei Lenksystemen von Fahrzeugen zu nutzen, welcher ein Rückstellmoment auf einem Lenkrad aufbringt. In diesem Zusammenhang kann auch von einem Force-Feedback Lenkrad gesprochen werden. Auf dieser Weise kann der Fahrkomfort insbesondere bei Steer-by-Wire Lenksystemen verbessert werden. Bei Steer-by-Wire Lenksystemen wird der Lenkbefehl elektrisch übertragen. Entsprechend kann es vorgesehen sein, dass eine mechanische Kupplung zwischen dem Lenkrad und dem Lenkgetriebe nicht vorhanden ist. Daher bestehen hohe Sicherheitsanforderungen für die Funktionen eines solchen Lenksystems.

Es kann dabei technisch aufwendig sein, diese höheren Sicherheitsanforderungen für den Aktuator bzw. das Force-Feedback Lenkrad umzusetzen. Insbesondere kann es erforderlich sein, zu hohe Momente während des Fahrbetriebs zu verhindern, welche zu gefährlichen Betriebssituationen führen könnten.

Aus der DE 101 59 330 A1, US 6,571,176 B1 und US 9,037,352 B2 sind gattungsgemäße Verfahren bzw. Systeme bekannt. US 2006/201733 offenbart Verfahren zum Betreiben eines Lenksystems eines Fahrzeuges, wobei ein Aktuator zur Erzeugung eines Moments bei einer Lenkhandhabe des Fahrzeuges vorgesehen ist, wobei die nachfolgenden Schritte durchgeführt werden: Versteifen der Lenkhandhabe bei Ein- und/oder Ausstieg.

Es ist daher eine Aufgabe der vorliegenden Erfindung, die voranstehend beschriebenen Nachteile zumindest teilweise zu beheben. Insbesondere ist es Aufgabe der vorliegenden Erfindung, eine verbesserte Lösung zur Gewährleistung der Sicherheit bei dem Betrieb des Lenksystems vorzuschlagen.

Die voranstehende Aufgabe wird gelöst durch ein Verfahren mit den Merkmalen des Anspruchs 1, ein Sicherheitssystem mit den Merkmalen des Anspruchs 8 sowie durch ein Computerprogramm mit den Merkmalen des Anspruchs 10. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Sicherheitssystem sowie dem erfindungsgemäßen Computerprogramm, und jeweils umgekehrt, so dass bezüglich der Offenbarung zu den einzelnen Erfindungsaspekten stets wechselseitig Bezug genommen wird bzw. werden kann.

Die Aufgabe wird insbesondere gelöst durch ein Verfahren zum Betreiben eines Lenksystems eines Fahrzeuges.

Hierbei kann vorgesehen sein, dass ein Aktuator (nachfolgend auch als Lenkhandhabenaktuator oder Lenkradaktuator bezeichnet) zur Erzeugung eines Rückstellmoments, vorzugsweise Drehmoments oder Lenkmoments, bei einer Lenkhandhabe des Fahrzeuges vorgesehen ist, welches dem Drehmoment eines Fahrers (Handmoment) entgegenwirkt.

Vorteilhafterweise ist die Lenkhandhabe (z. B. in der Form eines Lenkrades des Fahrzeuges oder dergleichen) zur Bereitstellung eines Lenkbefehls ausgebildet. Der Lenkbefehl kann dabei elektrisch übertragen werden, wenn das Lenksystem als ein Steer-by-Wire Lenksystem ausgebildet ist. Bei derartigen Lenksystemen fehlt üblicherweise die mechanische Kopplung zwischen der Lenkhandhabe und dem Lenkgetriebe, sodass auch Rückstellkräfte nicht über diese Kopplung an die Lenkhandhabe übertragen werden können. Um daher eine vergleichbare Haptik zu erzielen, kann es sinnvoll sein, dass das Moment durch den Aktuator zur Rückstellung der Lenkhandhabe erzeugt wird. Auch sind weitere Komfortfunktionen denkbar, welche durch die Erzeugung des Moments bereitgestellt werden können. Eine mögliche Komfortfunktion kann eine Einstiegshilfe sein, welche durch ein Versteifen (Blockieren) der Lenkhandhabe ermöglicht wird. Hierzu sind allerdings höhere maximale Momente notwendig als die zur Rückstellung der Lenkhandhabe. Der Aktuator muss entsprechend zur Bereitstellung dieser höheren Momente ausgelegt sein. Es ist jedoch vorteilhaft, sicherzustellen, dass diese höheren maximalen Momente den Fahrbetrieb nicht negativ beeinflussen.

Erfindungsgemäß kann es vorgesehen sein, dass die nachfolgenden Schritte durchgeführt werden, vorzugsweise in beliebiger Reihenfolge und/oder auch zumindest teilweise zeitlich überlappend:
- Erzeugen des Rückstellmoments bis zu einem Maximalmoment, wenn das Maximalmoment freigegeben ist, und beschränkt auf ein geringeres Grenzmoment, wenn das Maximalmoment begrenzt ist,
- Erkennen einer Fahrzeugsituation bei dem Fahrzeug,
- Freigeben des Maximalmoments, wenn die Fahrzeugsituation als eine Ein- und/oder Ausstiegssituation erkannt wird, um die Lenkhandhabe zu versteifen,
- Begrenzen des Maximalmoments, wenn die Fahrzeugsituation als ein Fahrbetrieb des Fahrzeuges erkannt wird.

In anderen Worten kann das Rückstellmoment bei freigegebenem Maximalmoment auch maximal diesem Maximalmoment entsprechen, also bis zu diesem Maximalmoment erhöht werden. Dies ist z. B. sinnvoll, wenn die Lenkhandhabe versteift (blockiert) werden soll, um insbesondere als eine Einstiegshilfe zu dienen. Hingegen geht von diesem Maximalmoment im normalen Fahrbetrieb des Fahrzeuges eine potentielle Gefahr aus, z. B. wenn das Moment aufgrund einer Fehlfunktion bis zum Maximalmoment erhöht werden sollte. Daher ist die zusätzliche Begrenzung des Maximalmoments vorteilhaft, wenn die Fahrzeugsituation als der Fahrbetrieb des Fahrzeuges erkannt wird. Bspw. wird die Fahrzeugsituation immer dann als der Fahrbetrieb erkannt, wenn die Ein- und/oder Ausstiegssituation nicht erkannt wird, und/oder wenn die Zündung aktiviert ist und/oder die Fahrgeschwindigkeit größer 0 ist.

Vorteilhafterweise kann das Rückstellmoment maximal bis zum Grenzmoment erhöht werden, wenn das Maximalmoment begrenzt ist. Das Grenzmoment beträgt z. B. 5 % bis 50 %, vorzugsweise 15 % bis 40 %, bevorzugt 20 % bis 30 %, und/oder maximal 50 %, des Maximalmoments. Damit ist die Sicherheit beim Fahrbetrieb deutlich erhöht.

Es kann vorgesehen sein, dass die Funktion und/oder das (erfindungsgemäße) Computerprogramm zur Begrenzung des Maximalmoments den anderen Funktionen zur Erzeugung des Moments überlagert ist. Die Funktion bzw. das Computerprogramm kann dabei auch mit einer sehr hohen Sicherheitsintegrität entwickelt sein. Somit wird gewährleistet, dass die Begrenzung stets aktiv ist, z. B. auch bei einem Fehlerfall des Lenksystems.

Erfindungsgemäß kann der Vorteil erzielt werden, dass die Ein- und/oder Ausstiegssituation erkannt wird, um dabei hohe Rückstellmomente an der Lenkhandhabe zuzulassen. Hingegen kann außerhalb dieser Ein- und/oder Ausstiegssituation, insbesondere nach dem Verlassen dieser Ein- und/oder Ausstiegssituation, das Rückstellmoment auf ein überlenkbares Maß begrenzt werden. In anderen Worten kann das Maximalmoment begrenzt werden, auch wenn der Aktuator grundsätzlich zur Erzeugung dieses Maximalmoments ausgeführt ist. Der Aktuator ist bspw. ein Elektromotor, welcher das Moment in der Form eines Dreh- und/oder Lenkmoments an der Lenkhandhabe ausübt. Nur beim Ein- und Aussteigen können dann die hohen Maximalmomente erlaubt sein. Es wird daher sichergestellt, dass die Rückstellmomente vom Fahrer im Fahrbetrieb jederzeit überlenkt werden können, und damit keine kritischen Fahrzustände entstehen.

Weiter kann im Rahmen der Erfindung vorgesehen sein, dass sobald im normalen Betrieb (Fahrbetrieb) das Rückstellmoment das Maximalmoment erreicht und/oder das Grenzmoment überschreitet, das Moment begrenzt oder der Aktuator abgeschaltet wird.

Es kann außerdem bei dem erfindungsgemäßen Verfahren vorgesehen sein, dass ein Handmoment ausgewertet wird, welches der Fahrer auf die Lenkhandhabe aufbringt. So kann, wenn dieses Handmoment mit einem bestimmten Mindestwert länger anhält und/oder ein sehr hoher Handmomentgradient festgestellt wird, das Moment des Aktuators ggf. reduziert oder vollständig weggeschaltet werden.

Es kann im Rahmen der Erfindung vorgesehen sein, dass die Ein- und/oder Ausstiegssituation dadurch erkannt wird, dass wenigstens eine Anforderung detektiert wird. Bspw. kann die wenigstens eine Anforderung die Detektion einer deaktivierten Fahrbereitschaft und/oder einer deaktivierten Zündung des Fahrzeug-Motors und/oder einer Offenstellung einer Tür und/oder Klappe des Fahrzeuges umfassen. Optional müssen sämtliche der Anforderungen kumulativ detektiert werden, um die Ein- und/oder Ausstiegssituation zu erkennen. Damit kann sichergestellt werden, dass das Fahrzeug tatsächlich nicht gefahren wird bzw. werden soll. Hingegen kann ein Fahrbetrieb dann erkannt werden, wenn eine aktivierte Fahrbereitschaft und/oder eine Aktivierung der Zündung und/oder eine Geschlossenstellung der Tür und/oder Klappe beim Fahrzeug detektiert wird. Die Fahrbereitschaft wird z. B. über ein Bussystem, insbesondere ein CAN-Bussystem, durch ein Steuergerät des Fahrzeuges mitgeteilt, und kann entsprechend für die vorgenannten Detektionen ausgelesen werden.

Vorteilhaft ist es zudem, wenn das Fahrzeug als ein Kraftfahrzeug, insbesondere gleisloses Landkraftfahrzeug, zum Beispiel als ein Hybridfahrzeug, das eine Brennkraftmaschine und eine Elektromaschine zur Traktion umfasst oder als ein Elektrofahrzeug ausgebildet ist, vorzugsweise mit einem Hochvolt-Bordnetz und/oder einem Elektromotor. Insbesondere kann das Fahrzeug als ein Brennstoffzellenfahrzeug und/oder Personenkraftfahrzeug ausgebildet sein. Bevorzugt ist bei Ausführungsformen von Elektrofahrzeugen kein Verbrennungsmotor beim Fahrzeug vorgesehen, es wird dann ausschließlich durch elektrische Energie angetrieben.

Die Lenkhandhabe ist z. B. als ein Lenkrad ausgeführt, welches ein Fahrer des Fahrzeuges zur Steuerung des Fahrzeuges und insbesondere zur Mitteilung des Lenkbefehls nutzt.

Ein Fahrer kann zur Mitteilung des Lenkbefehls z. B. ein Drehmoment (Handmoment) auf die Lenkhandhabe aufbringen. Dabei kann die Lenkhandhabe vorzugsweise im vorderen Fahrzeuginnenraum während des Fahrbetriebs, also der Fortbewegung des Fahrzeuges, für den Fahrer zugänglich angeordnet sein.

Darüber hinaus ist es im Rahmen der Erfindung möglich, dass die Lenkhandhabe als eine Force-Feedback (auch: Kraftrückkopplung oder engl. haptic technology) Lenkhandhabe, insbesondere Lenkrad, ausgeführt ist. Hierzu kann ein Aktuator, auch als ein Force-Feedback-Aktuator oder Lenkhandhabenaktuator bezeichnet, zum Einsatz kommen. Dieser kann dazu ausgeführt sein, ein Moment auf die Lenkhandhabe aufzubringen. Der Aktuator kann auf diese Weise dem Fahrer das Lenkgefühl und/oder die Haptik vermitteln, welche auch bei einem mechanisch durchgetriebenen Lenksystem vorgesehen ist. Wenn der Fahrer bspw. die Lenkhandhabe betätigt, also ein Drehmoment auf die Lenkhandhabe aufbringt, kann der Aktuator das Rückstellmoment erzeugen, welches dem Drehmoment des Fahrers (also dem Handmoment) entgegenwirkt. Außerdem kann das durch den Aktuator erzeugte Moment dazu dienen, die Lenkhandhabe zu blockieren, also zu versteifen. Hierzu wird bspw. ein Moment von mindestens 40 Nm oder mindestens 60 Nm oder mindestens 80 Nm genutzt.

Der Force-Feedback-Aktuator kann bspw. als ein Elektromotor ausgeführt sein. Dieser Elektromotor kann gemäß einer Variante direkt an der Lenksäule angekoppelt sein, um ein Moment an der Lenkhandhabe aufzubringen. Auch ist es möglich, dass der Rotor des Elektromotors als die Lenkwelle ausgeführt ist, und somit die Lenkwelle direkt angetrieben wird.

Es kann ferner möglich sein, dass das Rückstellmoment beschränkt auf das Grenzmomenterzeugt wird insbesondere um eine Haptik beim Lenken des Fahrzeuges für den Fahrer zu beeinflussen.

Vorteilhafterweise kann bei der Erfindung vorgesehen sein, dass das Grenzmoment dazu ausgeführt ist, ein Überlenken des Grenzmoments durch einen Fahrer bzw. durch das Handmoment zuzulassen, und/oder das Maximalmoment dazu ausgeführt ist, das Überlenken zu verhindern. Entsprechend kann es möglich sein, dass das Grenzmoment kleiner ist als ein übliches Handmoment, oder in der Größenordnung des Handmoments festgelegt ist. Dagegen kann das Maximalmoment deutlich größer sein als das übliche Handmoment.

Es kann von Vorteil sein, wenn im Rahmen der Erfindung das Maximalmoment mindestens 40 Nm oder mindestens 60 Nm oder mindestens 80 Nm beträgt, und das Grenzmoment maximal 20 Nm oder maximal 10 Nm oder maximal 8 Nm beträgt. Bspw. liegt das Maximalmoment im Bereich von 40 Nm bis 100 Nm, vorzugsweise 60 Nm bis 80 Nm. Das Grenzmoment kann z. B. im Bereich von 1 Nm bis 30 Nm, vorzugsweise 2 Nm bis 20 Nm, bevorzugt 3 Nm bis 10 Nm liegen.

Vorteilhaft ist es zudem, wenn das Erkennen der Fahrzeugsituation wenigstens einen der nachfolgenden Schritte umfasst:
- Detektieren einer deaktivierten Fahrbereitschaft des Fahrzeuges,
- Detektieren einer deaktivierten Zündung eines Motors des Fahrzeuges,
- Detektieren eines Stillstands des Fahrzeuges anhand einer Fahrgeschwindigkeit,
- Detektieren einer Offenstellung einer Tür und/oder Klappe des Fahrzeuges,
jeweils um die Fahrzeugsituation als eine Ein- und/oder Ausstiegssituation zu erkennen. Die Detektionen müssen dabei ggf. auch kumulativ vorliegen, damit die Ein- und/oder Ausstiegssituation erkannt wird.

Gemäß einer vorteilhaften Weiterbildung der Erfindung kann vorgesehen sein, dass der Aktuator, insbesondere in der Form eines Elektromotors, redundante Wicklungen aufweist, vorzugsweise mindestens oder genau 6 Wicklungen aufweist, wobei vorzugsweise das Freigeben des Maximalmoments dadurch erfolgt, dass sämtliche Wicklungen zum Erzeugen des Moments verwendet werden, und/oder das Begrenzen des Maximalmoments dadurch erfolgt, dass nur ein Teil der Wicklungen, vorzugweise die Hälfte, zum Erzeugen des Moments verwendet verwenden. Damit ist eine sichere und zuverlässige Begrenzung des Maximalmoments auf das Grenzmoment möglich.

Außerdem kann es im Rahmen der Erfindung möglich sein, dass bei einem Fehlerfall des Lenksystems und/oder des Aktuators die eine Hälfte der Wicklungen auf die zweite Hälfte umgeschaltet wird, sodass die Redundanz zur weiteren Verfügbarkeit des Aktuators führt. In anderen Worten kann hierbei die erste Hälfte, welche bis dahin für die Erzeugung des Moments verwendet wurde, deaktiviert werden, und die zweite Hälfte, welche bis dahin deaktiviert war, aktiviert und somit für die Erzeugung des Moments verwendet werden.

Vorteilhaft ist es darüber hinaus, wenn im Rahmen der Erfindung das Lenksystem als ein Steer-by-Wire Lenksystem ausgebildet ist.

Unter einem "Steer-by-Wire" Lenksystem (d. h. insbesondere "Lenken-per-Draht" Lenksystem) wird vorteilhafterweise ein Lenksystem verstanden, bei welchem der Lenkbefehl elektrisch übertragen wird. Konkret kann der Lenkbefehl hierbei von der Lenkhandhabe elektrisch zum elektromechanischen Aktor, insbesondere Road Wheel-Aktuator oder Radstellaktuator, der den Lenkbefehl ausführt, weitergeleitet werden. In anderen Worten kann bei einem solchen Lenksystem keine mechanische Verbindung zwischen Lenkhandhabe und Lenkgetriebe und/oder gelenkten Rädern im Normalbetrieb vorgesehen sein. Konkret kann im Normalfall z. B. auf die mechanische Verbindung zwischen Lenkhandhabe und Spurstange über die Lenksäule verzichtet werden.

Ebenfalls Gegenstand der Erfindung ist ein Sicherheitssystem für ein Lenksystem eines Fahrzeuges, vorzugsweise zur Ausführung eines erfindungsgemäßen Verfahrens, aufweisend:
- einen Aktuator, wie einen Elektromotor, zum Erzeugen eines Rückstellmoments bei einer Lenkhandhabe, wie eines Lenkrads, des Fahrzeuges bis zu einem Maximalmoment, wenn das Maximalmoment freigegeben ist, und beschränkt auf ein geringeres Grenzmoment, wenn das Maximalmoment begrenzt ist,
- ein Erkennungsmittel zum Erkennen einer Fahrzeugsituation bei dem Fahrzeug,
- ein Freigabemittel zum Freigeben des Maximalmoments, wenn die Fahrzeugsituation als eine Ein- und/oder Ausstiegssituation erkannt wird, um die Lenkhandhabe zu versteifen,
- ein Begrenzungsmittel zum Begrenzen des Maximalmoments, wenn die Fahrzeugsituation als ein Fahrbetrieb des Fahrzeuges erkannt wird.

Damit bringt das erfindungsgemäße Sicherheitssystem die gleichen Vorteile mit sich, wie sie ausführlich mit Bezug auf ein erfindungsgemäßes Verfahren beschrieben worden sind. Zudem kann das Sicherheitssystem geeignet sein, die Schritte eines erfindungsgemäßen Verfahrens durchzuführen.

Das Erkennungsmittel kann zum Erkennen der Fahrzeugsituation bspw. wenigstens ein Verarbeitungsmittel, wie einen Mikrocontroller, und/oder einen Sensor und/oder wenigstens einen Signaleingang aufweisen. Über den Signaleingang kann bspw. ein elektrisches Signal des Sensors und/oder eine Nachricht empfangen werden, welche die Fahrbereitschaft des Fahrzeuges indiziert. Hierzu ist der Signaleingang z. B. als Teil einer CAN (Controller Area Network)-Bus Schnittstelle ausgeführt, um die Nachricht als eine CAN-Nachricht zu empfangen. Wenigstens ein Sensor des Erkennungsmittels kann z. B. eine Offenstellung oder eine Geschlossenstellung einer Klappe, wie einer Tür, des Fahrzeuges und/oder eine aktivierte bzw. deaktiviert Zündung und/oder eine Geschwindigkeit des Fahrzeuges erkennen.

Das Erkennungsmittel und/oder das Freigabemittel und/oder das Begrenzungsmittel können ferner jeweils auch Teil einer Elektronik des Sicherheitssystems oder eines (ggf. erfindungsgemäßen) Computerprogramms sein. Insbesondere das Freigabe- und/oder Begrenzungsmittel kann dazu ausgeführt ein, eine Ansteuerung und/oder Regelung des Aktuators zu beeinflussen und/oder zu kontrollieren. Funktional kann das Erkennungsmittel und/oder das Freigabemittel und/oder das Begrenzungsmittel anderen Funktionen zur Ansteuerung und/oder Regelung des Aktuators überlagert sein. In anderen Worten können Steuerungsbefehle dieser Mittel eine höhere Priorität aufweisen, als die der anderen Funktionen. Damit wird gewährleistet, dass auch im Fehlerfall (z. B. bei einem Fehler dieser Funktionen) durch das Begrenzungsmittel dennoch eine Begrenzung des Moments erfolgen kann. Hierzu wird das Begrenzungsmittel ggf. auch mit einer höheren Sicherheitsintegrität entwickelt als die anderen Funktionen.

Ebenfalls Gegenstand der Erfindung ist ein Computerprogramm, insbesondere Computerprogrammprodukt, zum Betreiben eines Lenksystems eines Fahrzeuges, insbesondere zum Betreiben eines Aktuators des Lenksystems und/oder eines erfindungsgemäßen Sicherheitssystems. Hierbei ist vorgesehen, dass das Lenksystem einen bzw. den Aktuator zur Erzeugung eines Rückstellmoments bei einer Lenkhandhabe des Fahrzeuges aufweist, wobei das Computerprogramm Befehle umfasst, die bei der Ausführung durch eine Verarbeitungsvorrichtung wie einen Mikrocontroller und/oder Prozessor und/oder dergleichen diese veranlassen, die nachfolgenden Schritte auszuführen:
- Erkennen einer Fahrzeugsituation bei dem Fahrzeug,
- Freigeben der Erzeugung des Rückstellmoments bis zu einem Maximalmoment (insbesondere sodass das Moment dem Maximalmoment zumindest kurzzeitig auch entspricht), wenn die Fahrzeugsituation als eine Ein- und/oder Ausstiegssituation erkannt wird, um die Lenkhandhabe zu versteifen,
- Begrenzen der Erzeugung des Rückstellmoments auf ein Grenzmoment geringer als das Maximalmoment (insbesondere sodass das Moment dem Maximalmoment keinesfalls entspricht), wenn die Fahrzeugsituation als ein Fahrbetrieb des Fahrzeuges erkannt wird.

Damit bringt das erfindungsgemäße Computerprogramm die gleichen Vorteile mit sich, wie sie ausführlich mit Bezug auf ein erfindungsgemäßes Verfahren beschrieben worden sind. Zudem kann das Computerprogramm geeignet sein, ein erfindungsgemäßes Verfahren auszuführen.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Figur 1: eine schematische Darstellung eines erfindungsgemäßen Sicherheitssystems,
- Figur 2: eine schematische Darstellung zur Visualisierung eines erfindungsgemäßen Verfahrens und Computerprogramms.

In den nachfolgenden Figuren werden für die gleichen technischen Merkmale auch von unterschiedlichen Ausführungsbeispielen die identischen Bezugszeichen verwendet.

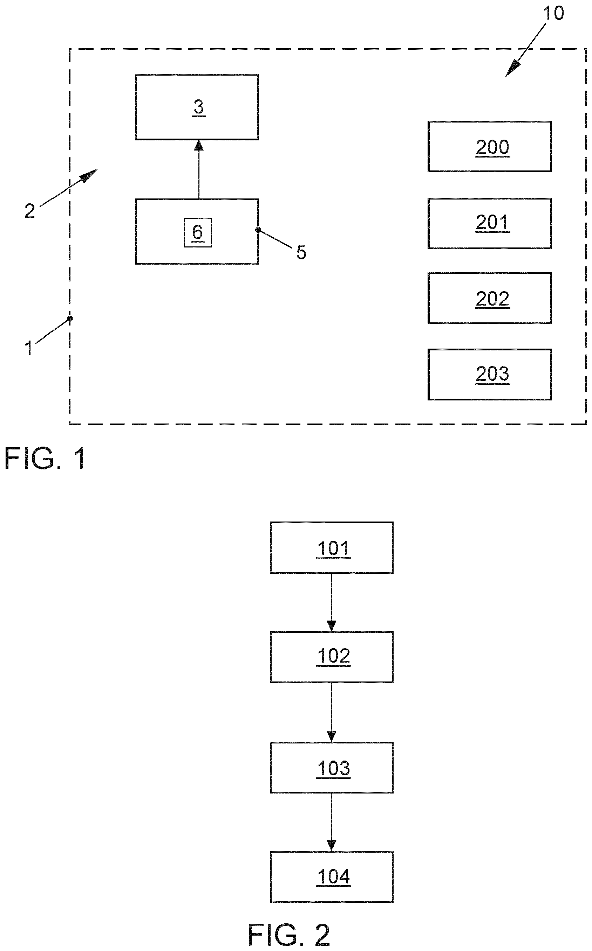

In Figur 1 ist ein Sicherheitssystem 10 für ein Lenksystem 2 eines Fahrzeuges 1 gezeigt. Dieses kann einen Aktuator 5 umfassen, welcher zum Erzeugen 101 eines Rückstellmoments bei einer Lenkhandhabe 3 des Fahrzeuges 1 bis zu einem Maximalmoment dient, wenn das Maximalmoment freigegeben ist. In anderen Worten kann hierbei das Moment das Maximalmoment nicht übersteigen. Bspw. ist hierzu der Aktuator 5 als ein Elektromotor ausgeführt, welcher das Moment in der Form eines Dreh- und/oder Lenkmoments auf die Lenkhandhabe 3 aufbringt. Die Lenkhandhabe 3 ist bspw. als ein Lenkrad 3 ausgeführt, und kann als eine Ein- und Ausstiegshilfe dienen, sofern das Maximalmoment zur Blockierung der Lenkhandhabe 3 bzw. des Lenkrads 3 aufgebracht wird. Allerdings sollte für die reguläre Nutzung der Lenkhandhabe 3 dieses Maximalmoment begrenzt werden, um die Blockierung der Lenkhandhabe 3 zu verhindern. Entsprechend kann der Aktuator 5 auch dazu ausgeführt sein, das Moment (nur) beschränkt auf ein Grenzmoment geringer als das Maximalmoment zu erzeugen, wenn das Maximalmoment begrenzt ist. In anderen Worten kann hierbei das Moment das Grenzmoment nicht übersteigen. Für diese Begrenzung kann ein Begrenzungsmittel 203 z. B. als Teil einer Ansteuerungssoftware und/oder -elektronik vorgesehen sein.

Die Nutzung dieser Begrenzung des Maximalmoments kann in Abhängigkeit von einer Fahrzeugsituation bei dem Fahrzeug 1 erfolgen. Hierzu kann ein Erkennungsmittel 201 zum Erkennen 102 dieser Fahrzeugsituation vorgesehen sein. Damit kann z. B. eine Ein- und/oder Ausstiegssituation erkannt werden, also eine Situation, in welcher der Fahrer des Fahrzeuges 1 ein- oder aussteigen möchte. Diese Situation kann dadurch gekennzeichnet sein, dass das Fahrzeug 1 stillsteht. Dies kann ggf. als eine Möglichkeit zur einfachen Erkennung der Ein- und/oder Ausstiegssituation durch das Erkennungsmittel 201 detektiert werden. Im Falle der positiven Erkennung der Ein- und/oder Ausstiegssituation kann dann ein Freigabemittel 202 zum Freigeben 103 des Maximalmoments verwendet werden, um die Lenkhandhabe 3 zu versteifen (d. h. zu blockieren). Dagegen kann ein Begrenzungsmittel 203 zum Begrenzen 104 des Maximalmoments vorgesehen sein, wenn die Fahrzeugsituation als ein Fahrbetrieb des Fahrzeuges 1 erkannt wird.

Der Aktuator 5 kann ferner redundante Wicklungen 6 aufweisen, insbesondere mindestens 6 Wicklungen 6 aufweisen, wobei das Freigeben 103 des Maximalmoments dadurch erfolgt, dass sämtliche Wicklungen 6 zum Erzeugen 101 des Moments verwendet werden, und das Begrenzen 104 des Maximalmoments dadurch erfolgt, dass nur ein Teil der Wicklungen 6, vorzugweise die Hälfte, zum Erzeugen 101 des Moments verwendet verwenden.

In Figur 2 ist ein erfindungsgemäßes Verfahren zum Betreiben eines Lenksystems 2 eines Fahrzeuges 1 visualisiert. Darüber hinaus dient die Visualisierung der Verfahrensschritte auch zur Darstellung eines erfindungsgemäßen Computerprogramms. Es wird hierbei ein Aktuator 5 zur Erzeugung eines Moments bei einer Lenkhandhabe 3 des Fahrzeuges 1 verwendet. Des Weiteren erfolgt gemäß einem ersten Verfahrensschritt 101 ein Erzeugen des Moments bis zu einem Maximalmoment, wenn das Maximalmoment freigegeben ist, und beschränkt auf ein geringeres Grenzmoment, wenn das Maximalmoment begrenzt ist. Gemäß einem zweiten Verfahrensschritt 102 erfolgt ein Erkennen einer Fahrzeugsituation bei dem Fahrzeug 1. Als dritter Verfahrensschritt 103 erfolgt ein Freigeben des Maximalmoments, wenn die Fahrzeugsituation als eine Ein- und/oder Ausstiegssituation erkannt wird, um die Lenkhandhabe 3 zu versteifen. Der vierte Verfahrensschritt 104 umfasst ein Begrenzen des Maximalmoments, wenn die Fahrzeugsituation als ein Fahrbetrieb des Fahrzeuges 1 erkannt wird.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 1: Fahrzeug
- 2: Lenksystem
- 3: Lenkhandhabe
- 5: Aktuator, Force-Feedback-Aktuator
- 6: Wicklungen

- 10: Sicherheitssystem

- 101: Erzeugen
- 102: Erkennen
- 103: Freigeben
- 104: Begrenzen

- 200: Verarbeitungsvorrichtung
- 201: Erkennungsmittel
- 202: Freigabemittel
- 203: Begrenzungsmittel

## Patentansprüche

1. Verfahren zum Betreiben eines Lenksystems (2) eines Fahrzeuges (1), wobei ein Aktuator (5) zur Erzeugung eines Rückstellmoments, welches dem Drehmoment eines Fahrers entgegenwirkt, bei einer Lenkhandhabe (3) des Fahrzeuges (1) vorgesehen ist, wobei die nachfolgenden Schritte durchgeführt werden:
- Erzeugen (101) des Rückstellmoments bis zu einem Maximalmoment, wenn das Maximalmoment freigegeben ist, und beschränkt auf ein geringeres Grenzmoment, wenn das Maximalmoment begrenzt ist,
- Erkennen (102) einer Fahrzeugsituation bei dem Fahrzeug (1),
- Freigeben (103) des Maximalmoments, wenn die Fahrzeugsituation als eine Ein- und/oder Ausstiegssituation erkannt wird, um die Lenkhandhabe (3) zu versteifen,
- Begrenzen (104) des Maximalmoments, wenn die Fahrzeugsituation als ein Fahrbetrieb des Fahrzeuges (1) erkannt wird.

2. Verfahren nach Anspruch 1,
**dadurch gekennzeichnet,**
**dass** das Rückstellmoment beschränkt auf das Grenzmoment erzeugt wird, um eine Haptik beim Lenken des Fahrzeuges (1) für den Fahrer zu beeinflussen.

3. Verfahren nach Anspruch 1 oder 2,
**dadurch gekennzeichnet,**
**dass** das Grenzmoment dazu ausgeführt ist, ein Überlenken des Grenzmoments durch einen Fahrer zuzulassen, und das Maximalmoment dazu ausgeführt ist, das Überlenken zu verhindern.

4. Verfahren nach einem der vorhergehenden Ansprüche,
**dadurch gekennzeichnet,**
**dass** das Maximalmoment mindestens 40 Nm oder mindestens 60 Nm oder mindestens 80 Nm beträgt, und das Grenzmoment maximal 20 Nm oder maximal 10 Nm oder maximal 8 Nm beträgt.

5. Verfahren nach einem der vorhergehenden Ansprüche,
**dadurch gekennzeichnet,**
**dass** das Erkennen (102) der Fahrzeugsituation wenigstens einen der nachfolgenden Schritte umfasst:
- Detektieren einer deaktivierten Fahrbereitschaft des Fahrzeuges (1),
- Detektieren einer deaktivierten Zündung eines Motors des Fahrzeuges (1),
- Detektieren eines Stillstands des Fahrzeuges anhand einer Fahrgeschwindigkeit,
- Detektieren einer Offenstellung einer Tür und/oder Klappe des Fahrzeuges (1), jeweils um die Fahrzeugsituation als eine Ein- und/oder Ausstiegssituation zu erkennen.

6. Verfahren nach einem der vorhergehenden Ansprüche,
**dadurch gekennzeichnet,**
**dass** der Aktuator (5) redundante Wicklungen (6) aufweist, insbesondere mindestens 6 Wicklungen (6) aufweist, wobei das Freigeben (103) des Maximalmoments dadurch erfolgt, dass sämtliche Wicklungen (6) zum Erzeugen (101) des Moments verwendet werden, und das Begrenzen (104) des Maximalmoments dadurch erfolgt, dass nur ein Teil der Wicklungen (6), vorzugweise die Hälfte, zum Erzeugen (101) des Moments verwendet verwenden.

7. Verfahren nach einem der vorhergehenden Ansprüche,
**dadurch gekennzeichnet,**
**dass** das Lenksystem (2) als ein Steer-by-Wire Lenksystem (2) ausgebildet ist.

8. Sicherheitssystem (10) für ein Lenksystem (2) eines Fahrzeuges (1), aufweisend:
- einen Aktuator (5) zum Erzeugen (101) eines Rückstellmoments, welches dem Drehmoment eines Fahrers entgegenwirkt, bei einer Lenkhandhabe (3) des Fahrzeuges (1) bis zu einem Maximalmoment, wenn das Maximalmoment freigegeben ist, und beschränkt auf ein geringeres Grenzmoment, wenn das Maximalmoment begrenzt ist,
- ein Erkennungsmittel (201) zum Erkennen (102) einer Fahrzeugsituation bei dem Fahrzeug (1),
- ein Freigabemittel (202) zum Freigeben (103) des Maximalmoments, wenn die Fahrzeugsituation als eine Ein- und/oder Ausstiegssituation erkannt wird, um die Lenkhandhabe (3) zu versteifen,
- ein Begrenzungsmittel (203) zum Begrenzen (104) des Maximalmoments, wenn die Fahrzeugsituation als ein Fahrbetrieb des Fahrzeuges (1) erkannt wird.

9. Sicherheitssystem (10) nach Anspruch 8,
**dadurch gekennzeichnet,**
**dass** das Sicherheitssystem (10) zur Ausführung eines Verfahrens nach einem der Ansprüche 1 bis 7 ausgeführt ist.

10. Computerprogramm zum Betreiben eines Lenksystems (2) eines Fahrzeuges (1), wobei das Lenksystem (2) einen Aktuator (5) zur Erzeugung eines Rückstellmoments, welches dem Drehmoment eines Fahrers entgegenwirkt, bei einer Lenkhandhabe (3) des Fahrzeuges (1) aufweist, wobei das Computerprogramm Befehle umfasst, die bei der Ausführung durch eine Verarbeitungsvorrichtung (200) diese veranlassen, die nachfolgenden Schritte auszuführen:
- Erkennen (102) einer Fahrzeugsituation bei dem Fahrzeug (1),
- Freigeben (103) der Erzeugung des Rückstellmoments bis zu einem Maximalmoment, wenn die Fahrzeugsituation als eine Ein- und/oder Ausstiegssituation erkannt wird, um die Lenkhandhabe (3) zu versteifen,
- Begrenzen (104) der Erzeugung des Rückstellmoments auf ein Grenzmoment geringer als das Maximalmoment, wenn die Fahrzeugsituation als ein Fahrbetrieb des Fahrzeuges (1) erkannt wird.

## Claims

1. Method for operating a steering system (2) of a vehicle (1), wherein an actuator (5) is provided for generating a restoring moment, which opposes the torque from a driver, in a steering handle (3) of the vehicle (1), wherein the following steps are carried out:
- generating (101) the restoring moment up to a maximum moment, if the maximum moment is enabled, and limited to a lower limit moment, if the maximum moment is limited,
- identifying (102) a vehicle situation for the vehicle (1),
- enabling (103) the maximum moment, if the vehicle situation is identified as a boarding and/or deboarding situation, in order to stiffen the steering handle (3),
- limiting (104) the maximum moment, if the vehicle situation is identified as a driving mode of the vehicle (1).

2. Method according to Claim 1,
**characterized**
**in that** the restoring moment limited to the limit moment is generated in order to influence haptics for the driver during steering of the vehicle (1).

3. Method according to Claim 1 or 2,
**characterized**
**in that** the limit moment is designed to permit overriding of the limit moment by a driver, and the maximum moment is designed to prevent overriding.

4. Method according to one of the preceding claims, **characterized**
**in that** the maximum moment is at least 40 Nm or at least 60 Nm or at least 80 Nm, and the limit moment is at maximum 20 Nm or at maximum 10 Nm or at maximum 8 Nm.

5. Method according to one of the preceding claims, **characterized**
**in that** the identification (102) of the vehicle situation comprises at least one of the following steps:
- detecting a deactivated readiness of the vehicle (1) for driving,
- detecting a deactivated ignition of an engine of the vehicle (1),
- detecting if the vehicle is at a standstill on the basis of a driving speed,
- detecting an open position of a door and/or flap of the vehicle (1),
in each case in order to identify the vehicle situation as a boarding and/or deboarding situation.

6. Method according to one of the preceding claims, **characterized**
**in that** the actuator (5) has redundant windings (6), in particular has at least 6 windings (6), wherein the maximum moment is enabled (103) by the fact that all of the windings (6) are used for generating (101) the moment, and the maximum moment is limited (104) by the fact that only some of the windings (6), preferably half, are used for generating (101) the moment.

7. Method according to one of the preceding claims, **characterized**
**in that** the steering system (2) is designed as a steer-by-wire steering system (2).

8. Safety system (10) for a steering system (2) of a vehicle (1), having:
- an actuator (5) for generating (101) a restoring moment, which opposes the torque from a driver, in a steering handle (3) of the vehicle (1) up to a maximum moment, if the maximum moment is enabled, and limited to a lower limit moment, if the maximum moment is limited,
- an identification means (201) for identifying (102) a vehicle situation for the vehicle (1),
- an enabling means (202) for enabling (103) the maximum moment, if the vehicle situation is identified as a boarding and/or deboarding situation, in order to stiffen the steering handle (3),
- a limiting means (203) for limiting (104) the maximum moment, if the vehicle situation is identified as a driving mode of the vehicle (1).

9. Safety system (10) according to Claim 8, **characterized**
**in that** the safety system (10) is designed for carrying out a method according to one of Claims 1 to 7.

10. Computer program for operating a steering system (2) of a vehicle (1), wherein the steering system (2) has an actuator (5) for generating a restoring moment, which opposes the torque from a driver, in a steering handle (3) of the vehicle (1), wherein the computer program comprises commands which, upon being executed by a processing device (200), trigger the latter to carry out the following steps:
- identifying (102) a vehicle situation for the vehicle (1),
- enabling (103) the generation of the restoring moment up to a maximum moment, if the vehicle situation is identified as a boarding and/or deboarding situation, in order to stiffen the steering handle (3),
- limiting (104) the generation of the restoring moment to a limit moment lower than the maximum moment, if the vehicle situation is identified as a driving mode of the vehicle (1).

## Revendications

1. Procédé d'exploitation d'un système de direction (2) d'un véhicule (1), un actionneur (5) étant prévu pour générer un couple de rappel, qui s'oppose au couple de rotation d'un conducteur, au niveau d'une manette de direction (3) du véhicule (1), les étapes suivantes étant réalisées :
- la génération (101) du couple de rappel jusqu'à un couple maximal lorsque le couple maximal est autorisé et restreint à un couple limite plus faible lorsque le couple maximal est limité,
- l'identification (102) d'une situation de véhicule au niveau du véhicule (1),
- l'autorisation (103) du couple maximal lorsque la situation de véhicule est identifiée comme une situation d'entrée et/ou de sortie, afin de rigidifier la manette de direction (3),
- la limitation (104) du couple maximal lorsque la situation de véhicule est identifiée comme un mode de conduite du véhicule (1).

2. Procédé selon la revendication 1, **caractérisé en ce que** le couple de rappel est restreint au couple limite afin d'influencer une haptique lors de la direction du véhicule (1) pour le conducteur.

3. Procédé selon la revendication 1 ou 2, **caractérisé en ce que** le couple limite est conçu pour permettre un surbraquage du couple limite par un conducteur, et le couple maximal est conçu pour empêcher le surbraquage.

4. Procédé selon l'une quelconque des revendications précédentes, **caractérisé en ce que** le couple maximal est d'au moins 40 Nm ou d'au moins 60 Nm ou d'au moins 80 Nm, et le couple limite est d'au plus 20 Nm ou d'au plus 10 Nm ou d'au plus 8 Nm.

5. Procédé selon l'une quelconque des revendications précédentes, **caractérisé en ce que** l'identification (102) de la situation de véhicule comprend au moins l'une des étapes suivantes :
- la détection d'un état de fonctionnement désactivé du véhicule (1),
- la détection d'un allumage désactivé d'un moteur du véhicule (1),
- la détection d'un arrêt du véhicule à partir d'une vitesse de conduite,
- la détection d'une position ouverte d'une porte et/ou d'un volet du véhicule (1),
respectivement pour identifier la situation de véhicule comme une situation d'entrée et/ou de sortie.

6. Procédé selon l'une quelconque des revendications précédentes, **caractérisé en ce que** l'actionneur (5) présente des enroulements redondants (6), notamment au moins 6 enroulements (6), l'autorisation (103) du couple maximal ayant lieu **en ce que** tous les enroulements (6) sont utilisés pour générer (101) le couple, et la limitation (104) du couple maximal ayant lieu **en ce que** seulement une partie des enroulements (6), de préférence la moitié, est utilisée pour générer (101) le couple.

7. Procédé selon l'une quelconque des revendications précédentes, **caractérisé en ce que** le système de direction (2) est configuré sous la forme d'un système de direction Steer-by-Wire (2).

8. Système de sécurité (10) pour un système de direction (2) d'un véhicule (1), présentant :
- un actionneur (5) pour générer (101) un couple de rappel, qui s'oppose au couple de rotation d'un conducteur, au niveau d'une manette de direction (3) du véhicule (1) jusqu'à un couple maximal lorsque le couple maximal est autorisé, et restreint à un couple limite plus faible lorsque le couple maximal est limité,
- un moyen d'identification (201) pour identifier (102) une situation de véhicule au niveau du véhicule (1),
- un moyen d'autorisation (202) pour autoriser (103) le couple maximal lorsque la situation de véhicule est identifiée comme une situation d'entrée et/ou de sortie, afin de rigidifier la manette de direction (3),
- un moyen de limitation (203) pour limiter (104) le couple maximal lorsque la situation de véhicule est identifiée comme un mode de conduite du véhicule (1).

9. Système de sécurité (10) selon la revendication 8, **caractérisé en ce que** le système de sécurité (10) est conçu pour exécuter un procédé selon l'une quelconque des revendications 1 à 7.

10. Programme informatique pour exploiter un système de direction (2) d'un véhicule (1), le système de direction (2) présentant un actionneur (5) pour générer un couple de rappel, qui s'oppose au couple de rotation d'un conducteur, au niveau d'une manette de direction (3) du véhicule (1), le programme informatique comprenant des instructions qui, lorsqu'elles sont exécutées par un dispositif de traitement (200), amènent celui-ci à exécuter les étapes suivantes :
- l'identification (102) d'une situation de véhicule au niveau du véhicule (1),
- l'autorisation (103) de la génération du couple de rappel jusqu'à un couple maximal lorsque la situation de véhicule est identifiée comme une situation d'entrée et/ou de sortie, afin de rigidifier la manette de direction (3),
- la limitation (104) de la génération du couple de rappel à un couple limite inférieur au couple maximal lorsque la situation de véhicule est identifiée comme un mode de conduite du véhicule (1).
